# EUROPEAN PATENT APPLICATION

(11) **EP 4 530 729 A1**
(43) Date of publication of application: **02.04.2025**
(21) Application number: 24162587.0
(22) Date of filing: 11.03.2024
(51) Int. Cl.: G03G 15/00

(54) **IMAGE FORMING APPARATUS, PROCESSING SYSTEM, PROGRAM, AND METHOD**

(30) Priority: 27.09.2023 JP 2023164239
(71) Applicant: Fujifilm Business Innovation Corp., Tokyo 107-0052 (JP)
(72) Inventor: SAWAI, Kenji, Yokohama, 220-8668 (JP)
(74) Representative: Meissner Bolte Partnerschaft mbB

(57) **Abstract**

An image forming apparatus includes: an image forming unit that transfers a toner image onto a recording medium, the toner image being formed on an image carrier by an electrophotographic system; and one or more processors that control an operation of the image forming unit, and that are configured to: perform multiple operations under different conditions about charging and exposure to light in predetermined order, the operations including at least an operation of forming a toner image on the recording medium with the image carrier having been subjected to charging and exposure to light and an operation of forming a toner image on the recording medium with the image carrier having been subjected to no exposure to light and optionally to charging; and control the image forming unit to form margins of different forms, the margins being formed on pieces of the recording medium in the respective operations performed under the different conditions.

## Description

### Background

### (i) Technical Field

The present disclosure relates to an image forming apparatus, a processing system, a program, and a method.

### (ii) Related Art

An image forming apparatus using an electrophotographic system has a function of forming a toner image with a photoreceptor drum having not been subjected to charging nor exposure to light, and checks for a malfunction of the apparatus by using images formed under various conditions about charging and exposure to light.

Japanese Unexamined Patent Application Publication No. 2019-139004 discloses an image forming apparatus including a photoreceptor, a charging device which charges the photoreceptor, and a developing device which develops an electrostatic latent image, which is formed on the photoreceptor, by using a developer. The image forming apparatus is capable of performing the following operations: an operation of performing developing by using a developer with the potential image-formation area of an image holding unit having been charged by a charging unit; an operation of performing developing by using a developer with the potential image-formation area of an image holding unit having not been charged by a charging unit.

When the state of an apparatus is diagnosed by using images formed under different conditions about charging and exposure to light to a photoreceptor drum, it is necessary to identify which image has been formed under which condition.

### Summary

Accordingly, it is an object of the present disclosure to provide a technique of identifying correspondences between formed images and conditions, which are used in formation of the images, on the basis of the images. The technique is used when images are formed under various conditions including the case of forming a toner image without charging nor exposure to light.

According to a first aspect of the present disclosure, there is provided an image forming apparatus comprising: an image forming unit that transfers a toner image onto a recording medium, the toner image being formed on an image carrier by an electrophotographic system; and one or more processors that control an operation of the image forming unit, and that are configured to: perform a plurality of operations under different conditions about charging and exposure to light in predetermined order, the plurality of operations including at least an operation of forming a toner image on the recording medium with the image carrier having been subjected to charging and exposure to light and an operation of forming a toner image on the recording medium with the image carrier having been subjected to no exposure to light and optionally to charging; and control the image forming unit to form margins of different forms, the margins being formed on pieces of the recording medium in the respective operations performed under the different conditions.

According to a second aspect of the present disclosure, in the image forming apparatus according to the first aspect, the one or more processors are configured to: control the image forming unit to form the margins having stepwise different forms, the margins being formed on the pieces of the recording medium in the respective operations under the different conditions in the predetermined order.

According to a third aspect of the present disclosure, in the image forming apparatus according to the first or second aspect, the one or more processors are configured to: control the image forming unit to form the margins having stepwise different sizes, the margins being formed in the plurality of operations performed in the predetermined order.

According to a fourth aspect of the present disclosure, in the image forming apparatus according to the first or second aspect, the one or more processors are configured to: control the image forming unit to form toner images having stepwise different densities, the toner images being formed in the margins in the plurality of operations performed in the predetermined order.

According to a fifth aspect of the present disclosure, in the image forming apparatus according to any one of the first to fourth aspects, the one or more processors are configured to: control the image forming unit to form the margins extending in a belt-like manner in a direction intersecting a feed direction of the recording medium, the margins being formed on either one or both of a leading side and a trailing side of the recording medium in the feed direction, the feed direction being a direction in which the recording medium is fed in image formation using the image forming unit.

According to a sixth aspect of the present disclosure, in the image forming apparatus according to any one of the first to fifth aspects, the one or more processors are configured to: control the image forming unit to form the margins having different widths, the margins being formed in the respective operations performed in the predetermined order.

According to a seventh aspect of the present disclosure, there is provided a processing system comprising: the image forming apparatus according to any one of the first to sixth aspects; a reading apparatus that reads pieces of the recording medium on which toner images have been formed by the image forming apparatus; and a processing apparatus that extracts the margins from the pieces of the recording medium which are read by the reading apparatus, and that, on a basis of the extracted margins, identifies execution order of a plurality of operations performed under the different conditions by the image forming apparatus.

According to an eighth aspect of the present disclosure, in the processing system according to the seventh aspect, the processing apparatus analyzes the toner images formed in the respective operations, on a basis of the identified execution order of the plurality of operations, identifies the conditions applied to the respective operations, and, on a basis of the analysis result of the toner images and the identified conditions, determines a state of the image forming apparatus.

According to a ninth aspect of the present disclosure, there is provided a program for controlling a computer included in an image forming apparatus, the image forming apparatus including an image forming unit, the image forming unit transferring a toner image onto a recording medium, the toner image being formed on an image carrier by an electrophotographic system, the computer controlling an operation of the image forming apparatus, the program causing the computer to execute a process comprising: causing the image forming unit to perform, in predetermined order, a plurality of operations under different conditions about charging and exposure to light, the plurality of operations including at least an operation of forming a toner image on the recording medium with the image carrier having been subjected to charging and exposure to light and an operation of forming a toner image on the recording medium with the image carrier having been subjected to no exposure to light and optionally to charging; and forming margins on pieces of the recording medium in the respective operations under the different conditions, the margins having different forms.

According to a tenth aspect of the present disclosure, there is provided a method for an image forming apparatus including an image forming unit, the image forming unit transferring a toner image onto a recording medium, the toner image being formed on an image carrier by an electrophotographic system, the method comprising: causing the image forming unit to perform, in predetermined order, a plurality of operations under different conditions about charging and exposure to light, the plurality of operations including at least an operation of forming a toner image on the recording medium with the image carrier having been subjected to charging and exposure to light and an operation of forming a toner image on the recording medium with the image carrier having been subjected to no exposure to light and optionally to charging; and forming margins on pieces of the recording medium in the respective operations under the different conditions, the margins having different forms.

The disclosure according to the first aspect enables correspondences between formed images and conditions, which are used in formation of the images, to be identified on the basis of the images.

The disclosure according to the second aspect facilitates identification of the output order of pieces of the recording medium through the stepwise differences among the forms of margins.

The disclosure according to the third aspect facilitates identification of the output order of pieces of the recording medium through the stepwise-changing sizes of margins.

The disclosure according to the fourth aspect facilitates identification of the output order of pieces of the recording medium through the stepwise-changing densities of toner images formed in margins.

The disclosure according to the fifth aspect facilitates comparison among margins in images, which are formed under the respective conditions, through determination of the positions of the margins.

The disclosure according to the sixth aspect facilitates identification using belt-like margins.

The disclosure according to the seventh aspect enables correspondences between formed images and the conditions, which are used in formation of the images, to be identified on the basis of the images.

The disclosure according to the eighth aspect enables correspondences between formed images and the conditions, which are used in formation of the images, to be identified on the basis of the images, and enables the image forming apparatus to be diagnosed.

The disclosure according to the ninth aspect enables correspondences between formed images and the conditions, which are used in formation of the images, to be identified on the basis of the images.

The disclosure according to the tenth aspect enables correspondences between formed images and the conditions, which are used in formation of the images, to be identified on the basis of the images.

### Brief Description of the Drawings

Exemplary embodiment of the present disclosure will be described in detail based on the following figures, wherein:
Fig. 1 is a diagram illustrating the configuration of a processing system to which the present exemplary embodiment is applied;
Fig. 2 is a diagram illustrating an image forming apparatus according to the present exemplary embodiment;
Fig. 3 is a diagram for describing an exemplary image forming unit;
Fig. 4 is a diagram illustrating an exemplary hardware configuration of a control device;
Fig. 5 is a diagram illustrating the following states of an image forming unit in diagnosis mode: in Fig. 5(A), the state of the image forming unit under a first image formation condition; in Fig. 5(B), the state of the image forming unit under a second image formation condition; in Fig. 5(C), the state of the image forming unit under a third image formation condition; in Fig. 5(D), the state of the image forming unit under a fourth image formation condition; and, in Fig. 5(E), the state of the image forming unit under a fifth image formation condition;
Figs. 6A to 6C are diagrams illustrating an example in which margins are formed on sheets on which diagnosis images are formed; Fig. 6A is a diagram illustrating an example in which a margin is formed on a sheet; Fig. 6B is a diagram illustrating an example in which a margin wider than the margin in Fig. 6A is formed on a sheet; Fig. 6C is a diagram illustrating the state in which sheets, on which different margins have been formed, are stacked;
Figs 7A to 7C are diagrams illustrating an example in which images having different densities are formed in margins on sheets on which diagnosis images are formed; Fig. 7A is a diagram illustrating an example in which an image having a density is formed in the margin; Fig. 7B is a diagram illustrating an example in which an image having a density different from the density in Fig. 7A is formed in the margin; Fig. 7C is a diagram illustrating the state in which sheets, on which images having different densities have been formed in the margins, are stacked; and
Fig. 8 is a diagram illustrating an exemplary configuration of an information processing apparatus.

### Detailed Description

An exemplary embodiment of the present disclosure will be described below by referring to the attached drawings.

### The Configuration of a Processing System

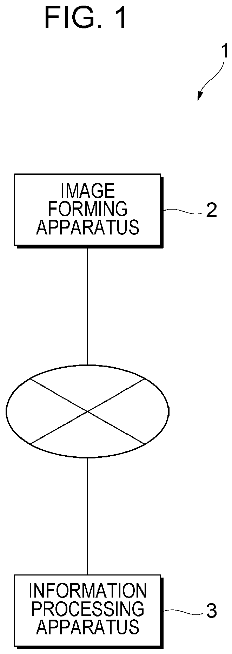

Fig. 1 is a diagram illustrating the configuration of a processing system 1 to which the present exemplary embodiment is applied. The processing system 1 includes an image forming apparatus 2 and an information processing apparatus 3. The apparatuses 2 and 3 are connected to each other over a network. The network, which is a communication unit used in information communication between the image forming apparatus 2 and the information processing apparatus 3, is, for example, a local area network (LAN). The image forming apparatus 2 and the information processing apparatus 3 may be connected by using the Internet or public lines, or may be directly connected by using a communication cable.

The image forming apparatus 2 reads documents and forms images on sheets P, which are an exemplary recording medium, through user operations. The information processing apparatus 3 reads sheets P, on which images have been formed, and determines the state of the image forming apparatus 2. The information processing apparatus 3 will be described below.

### The Configuration of the Image Forming Apparatus

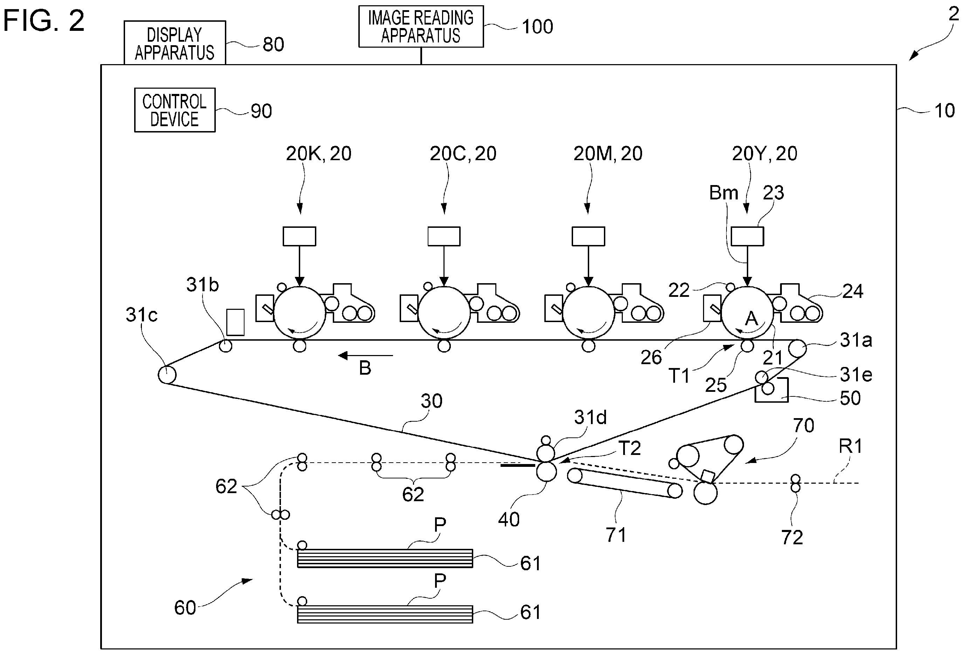

Fig. 2 is a diagram illustrating the image forming apparatus 2 according to the present exemplary embodiment.

As illustrated in Fig. 2, the image forming apparatus 2 has a housing 10. The image forming apparatus 2 has, in the housing 10, image forming units 20, an intermediate transfer belt 30, a second transfer roller 40, a belt cleaner 50, a paper feed unit 60, a fixing device 70, a display apparatus 80, and a control device 90. The image forming apparatus 2 includes a communication interface (not illustrated) used in information communication. An image reading apparatus 100, which reads images of documents which are put on its document platen, is disposed on the top surface of the housing 10. The dashed line illustrated in Fig. 2 indicates a transport path (R1) of sheets P. In the present exemplary embodiment, the image forming apparatus 2 employs an electrophotographic system.

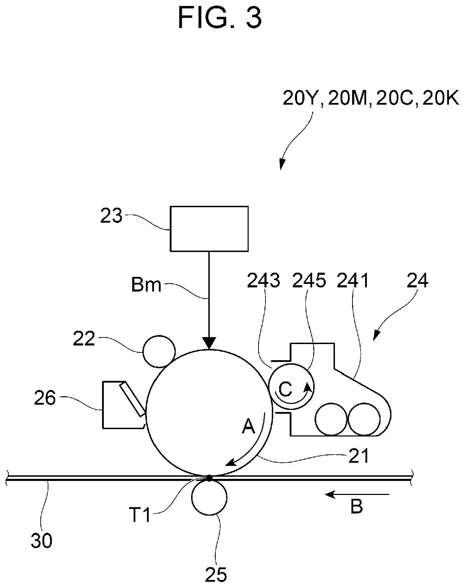

Fig. 3 is a diagram for describing an exemplary image forming unit 20.

The image forming units 20 are constituted, for example, by four image forming units 20Y, 20M, 20C, and 20K which individually form toner images of the respective four colors of yellow (Y), magenta (M), cyan (C), and black (K). By using Fig. 3, the image forming units 20 will be described using one of the image forming units 20Y, 20M, 20C, and 20K.

The image forming unit 20 includes a photoreceptor drum 21. The photoreceptor drum 21 receives power from a driving device (not illustrated). While the photoreceptor drum 21 rotates in the arrow A direction, an electrostatic latent image is formed. A charging device 22, an exposure device 23, a developing device 24, a first transfer roller 25, and a drum cleaner 26 are disposed around the photoreceptor drum 21. The charging device 22 charges the surface of the photoreceptor drum 21 to a predetermined potential.

For example, the exposure device 23 exposes the photoreceptor drum 21 to laser light to form an electrostatic latent image on the surface of the photoreceptor drum 21. In Fig. 3, light emitted from the exposure device 23 is denoted by reference character Bm. The potential at positions, where exposure to light is performed, of the photoreceptor drum 21, which has been charged by the charging device 22, is decreased. The exposure device 23's exposure of the photoreceptor drum 21 to light is not limited to exposure using laser light. For example, a light source such as a light emitting diode (LED) may be provided for each image forming unit 20, and the photoreceptor drum 21 may be exposed to light emitted from the light source.

The developing device 24 makes an electrostatic latent image, which has been formed on the photoreceptor drum 21, visible by using a developer. The developing device 24 includes a container 241 which contains a developer. For example, the container 241 is formed by a resin container housing. The developing device 24 is disposed so as to extend in the direction from the front to the rear of the image forming apparatus 2 (the direction orthogonal to the plane of Fig. 3).

The container 241 has an opening 243 disposed so as to be opposite the photoreceptor drum 21 (see Fig. 3). In the opening 243, a developing roller 245 for depositing toner on the surface of the photoreceptor drum 21 is disposed. The developing roller 245, which is columnar, is disposed so as to extend in the direction from the front to the rear of the image forming apparatus 2 (the direction orthogonal to the plane of Fig. 3). The developing roller 245 receives power from a driving device (not illustrated). While rotating in the arrow C direction illustrated in Fig. 3, the developing roller 245 deposits toner on the surface of the photoreceptor drum 21.

The developer according to the present exemplary embodiment includes dry carrier powder and dry toner powder. Each of the image forming units 20Y, 20M, 20C, and 20K uses the dry carrier powder and the dry toner powder to form a toner image on the photoreceptor drum 21. In this example, the carrier has the positive charge polarity; the toner has the negative charge polarity.

The first transfer roller 25 electrostatically transfers a toner image, which has been formed on the photoreceptor drum 21, onto the image-carrying surface of the intermediate transfer belt 30 at a first transfer position T1. At the first transfer position T1, a potential difference (first transfer bias) is caused to occur between the photoreceptor drum 21 and the first transfer roller 25. Thus, a toner image on the photoreceptor drum 21 is transferred onto the intermediate transfer belt 30 nipped between the photoreceptor drum 21 and the first transfer roller 25. The drum cleaner 26 is a cleaning member which removes residual toner on the surface of the photoreceptor drum 21 after first transfer.

The intermediate transfer belt 30 transports the toner image, which has been transferred onto the image-carrying surface of the intermediate transfer belt 30, to a second transfer position T2. As illustrated in Fig. 2, the intermediate transfer belt 30 is disposed at a position below the image forming units 20Y, 20M, 20C, and 20K. The intermediate transfer belt 30 is disposed so as to be nipped by the photoreceptor drums 21 of the respective image forming units 20Y, 20M, 20C, and 20K and the first transfer rollers 25. As illustrated in Fig. 2, the intermediate transfer belt 30 rotates at a predetermined rate in the arrow B direction through a driving roller 31a, which is driven by a driving device (not illustrated), and supporting rollers 31b to 31e.

The supporting roller 31b holds the first transfer surface in cooperation with the driving roller 31a. The supporting roller 31c provides tension to the intermediate transfer belt 30. The supporting roller 31d is a backup roller which supports transfer performed by the second transfer roller 40. The supporting roller 31e supports cleaning residual toner on the intermediate transfer belt by the belt cleaner 50 after second transfer.

The second transfer roller 40 electrostatically transfers toner images, which are held on the image-carrying surface of the intermediate transfer belt 30, onto a sheet P at the second transfer position T2. As illustrated in Fig. 2, the second transfer roller 40 is disposed so as to be opposite the supporting roller 31d with the intermediate transfer belt 30 interposed in between. At the second transfer position T2, a potential difference (second transfer bias) is caused to occur between the supporting roller 31d and the second transfer roller 40. Thus, toner images are transferred from the intermediate transfer belt 30, which is nipped between the supporting roller 31d and the second transfer roller 40, onto a sheet P. The belt cleaner 50 is a cleaning member which removes, for example, residual toner on the intermediate transfer belt 30 after second transfer.

The paper feed unit 60 includes sheet containers 61 and multiple feed rollers 62. The sheet containers 61 contain various types of sheets P which are to be supplied to the second transfer position T2. The feed rollers 62 feed sheets P, one by one, from a sheet container 61 to the sheet transport path R1, and transport the sheets P to the second transfer position T2. As illustrated in Fig. 2, the paper feed unit 60 is disposed below the intermediate transfer belt 30. The number of sheet containers 61 may be increased or decreased when necessary. A manual-feed tray (not illustrated), which is connected to the sheet transport path R1, may be disposed outside the housing 10.

The fixing device 70 fixes toner images which have been subjected to second transfer to a sheet P. As illustrated in Fig. 2, the fixing device 70 is disposed below the intermediate transfer belt 30. The fixing device 70 includes a heating roller and a pressure roller. As illustrated in Fig. 2, at the position where the heating roller is in contact with the pressure roller, a fixing process using heating and pressurization is performed on a sheet P.

The sheet transport path R1, which is a path along which a sheet P is transported, is disposed so as to connect the paper feed unit 60 to a sheet discharge tray (not illustrated). The sheet transport path R1 is illustrated by using a dashed line in Fig. 2. As illustrated in Fig. 2, on the sheet transport path R1, the feed rollers 62, a transport roller 71, and discharge rollers 72 are disposed. As described above, the feed rollers 62 feed a sheet P from a sheet container 61 to the sheet transport path R1, and transport the sheet P to the second transfer position T2. The transport roller 71 transports a sheet P, onto which toner images have been transferred at the second transfer position T2, to the fixing device 70. The discharge rollers 72 transport a sheet P, on which toner images have been fixed, to the sheet discharge tray (not illustrated).

The display apparatus 80 is, for example, a display disposed on the outer surface of the housing. The display apparatus 80 receives instructions from users, and displays information to users. The display apparatus 80, which is formed, for example, by a touch panel and the like, is used as a display apparatus and an operation device.

The control device 90, which is disposed inside the housing 10, controls operations of the image forming apparatus 2. For example, operations, such as image reading and image formation, image formation operations in diagnosis mode described below, and formation of margins on sheets P are controlled by the control device 90. These operations are performed in such a manner that a central processing unit (CPU) 91a, which is an exemplary processor described below, reads programs, which are stored in an information storage device 92 or the like, onto a random access memory (RAM) 91c, which is used as a work area, for execution.

### The Hardware Configuration of the Control Device

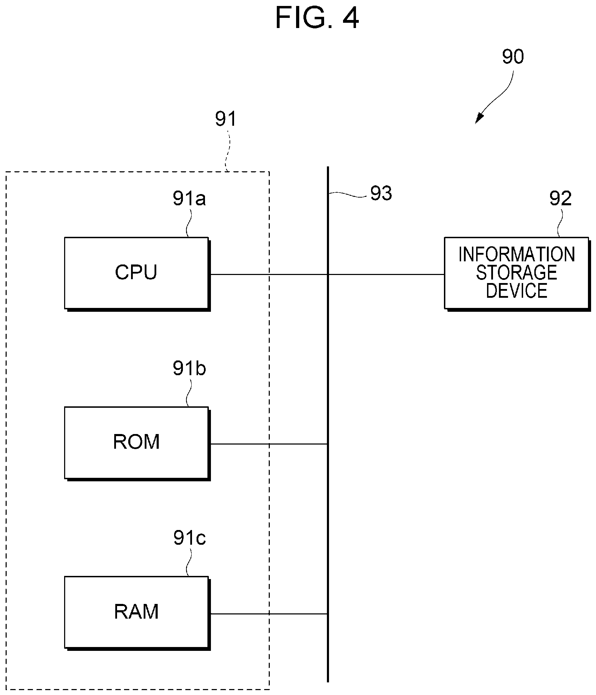

Fig. 4 is a diagram illustrating an exemplary hardware configuration of the control device 90.

The control device 90 includes a computation processor 91 and the information storage device 92 which stores information. The computation processor 91 is formed by a computer. The computation processor 91 includes the CPU 91a, which is an exemplary processor performing various processes described below. The computation processor 91 includes a read only memory (ROM) 91b, which stores programs, and the RAM 91c, which is used as a work area. The information storage device 92 is implemented by using an existing device, such as a hard disk drive or a semiconductor memory. The computation processor 91 is connected to the information storage device 92 through a bus 93 or a signal line (not illustrated).

Programs executed by the CPU 91a may be provided to the control device 90 in the state in which the programs are stored in a computer-readable recording medium, such as a magnetic recording medium (for example, a magnetic tape or a magnetic disk), an optical recording medium (for example, an optical disk), a magneto-optical recording medium, or a semiconductor memory. Programs executed by the CPU 91a may be provided to the control device 90 by using a communication unit such as the Internet. The programs provided to the control device 90 are stored in the information storage device 92.

In the present specification, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiment above, the term "processor" is broad enough to encompass one processor or plural processors in collaboration which are located physically apart from each other but may work cooperatively. The order of operations of the processor is not limited to one described in the embodiment above, and may be changed.

### An Image Formation Operation Performed by the Image Forming Apparatus

By using Figs. 2 and 3, an image formation operation performed by the image forming apparatus 2 will be described. This operation is performed in such a manner that the CPU 91a, which is an exemplary processor, reads programs, which are stored in the ROM 91b or the like, onto the RAM 91c, which is used as a work area, for execution. In this example, the case of forming a full-color image, which is constituted by a combination of toner images of four colors of Y, M, C, and K, will be described as an example. On the other hand, for example, a monochrome image may be formed with only the image forming unit 20K operating.

Upon reception of a request for an image formation operation, which is submitted, for example, through a user operation, the image forming apparatus 2 rotates the photoreceptor drums 21 of the image forming units 20Y, 20M, 20C, and 20K in the arrow A direction. The charging devices 22 charge the surfaces of the photoreceptor drums 21 to the predetermined potential.

Upon reception of image data, which is output from the image reading apparatus 100, a PC, or the like, along with the request for the image formation operation, the image forming apparatus 2 performs image processing on the image data. Thus, pieces of image data corresponding to the respective image forming units 20Y, 20M, 20C, and 20K are generated. The generated pieces of image data are output to the exposure devices 23.

The exposure devices 23 radiate, for example, light, which is emitted from lasers, to the photoreceptor drums 21 in accordance with the input image data. In the present exemplary embodiment, after the charging devices 22 charge the surfaces of the photoreceptor drums 21 to the predetermined potential, the exposure devices 23 expose the surfaces to light. Thus, electrostatic latent images at the predetermined potential are formed on the surfaces of the photoreceptor drums 21.

The developing devices 24 use the developing rollers 245 to deposit toner on the electrostatic latent images formed on the surfaces of the photoreceptor drums 21. Thus, toner images corresponding to four colors of Y, M, C, and K are formed individually on the surfaces of the photoreceptor drums 21.

The intermediate transfer belt 30 rotates in the arrow B direction. Thus, the toner images, which have been formed on the surfaces of the photoreceptor drums 21 of the image forming units 20Y, 20M, 20C, and 20K, are electrostatically transferred sequentially (in the order of Y, M, C, and K) onto the image-carrying surface of the intermediate transfer belt 30 at the first transfer positions T1. The drum cleaners 26 clean residual toner on the image-carrying surfaces of the photoreceptor drums 21.

The intermediate transfer belt 30 further rotates in the arrow B direction. Thus, the intermediate transfer belt 30 transports the toner images, which are obtained through the first transfer onto the image-carrying surface of the intermediate transfer belt 30 and are held on the image-carrying surface, to the second transfer position T2. Meanwhile, in the paper feed unit 60, the feed rollers 62 feed a sheet P from a sheet container 61 along the sheet transport path R1 to the second transfer position T2. At the second transfer position T2, the toner images, which are held on the image-carrying surface of the intermediate transfer belt 30, are subjected to second transfer onto the sheet P. The belt cleaner 50 cleans residual toner on the image-carrying surface of the intermediate transfer belt 30.

The sheet P, onto which the toner images have been transferred, is transported by the transport roller 71 to the fixing device 70. The fixing device 70 uses its heating roller and its pressure roller to heat and pressurize the sheet P. Thus, the toner images on the sheet P are fixed onto the sheet P. The sheet P is discharged to a discharge tray (not illustrated) by the discharge roller 72. The operation described above is an image formation operation performed when the image forming apparatus 2 according to the present exemplary embodiment performs a normal image formation operation (in the normal case). When a request for an image formation operation on multiple sheets is received, the image formation operation is repeatedly performed on each sheet in substantially the same manner.

In the present exemplary embodiment, diagnosis of a fault may be performed on each of the image forming units 20Y, 20M, 20C, and 20K. More specifically, in the present exemplary embodiment, determination about whether a fault is present and determination about where the fault has occurred may be performed on each of the image forming units 20Y, 20M, 20C, and 20K. In the present exemplary embodiment, in diagnosis of the image forming units 20, for example, a specifying person such as an operator first performs operations on the display apparatus 80 or the like, and specifies an image forming unit 20 which is to be a diagnosis target.

In the present exemplary embodiment, any image forming unit 20 of Y, M, C, or K which is specified by a specifying person will be diagnosed. Specification of an image forming unit 20, which is to be a diagnosis target, may be made, not by a specifying person, but by the control device 90 of the image forming apparatus 2 according to predetermined criteria. Alternatively, the control device 90 may specify the image forming units 20Y, 20M, 20C, and 20K one by one, and all the image forming units 20 may be diagnosed. When an image forming unit 20 is diagnosed, the image forming apparatus 2 performs image formation operations under multiple image formation conditions described below one by one, and forms, on sheets P, images for diagnosis (hereinafter referred to as "diagnosis images") which are obtained under the image formation conditions. In the description about image formation operations for diagnosis, as described above, the case in which a normal image formation operation is performed is called normal mode. The case in which image formation operations for diagnosis are performed is called diagnosis mode. In each mode, the CPU 91a, which is an exemplary processor, reads programs, which are stored in the information storage device 92 or the like, onto the RAM 91c, which is used as a work area, for execution.

### Diagnosis Mode

In diagnosis mode according to the present exemplary embodiment, there are five image formation conditions, that is, first to fifth image formation conditions. In the present exemplary embodiment, image formation operations corresponding to the image formation conditions are performed on an image forming unit 20, which is a diagnosis target, in predetermined order, and the obtained diagnosis images are formed on sheets P. In the present exemplary embodiment, diagnosis is performed by using the five image formation conditions. Alternatively, some of the image formation conditions may be specified for use.

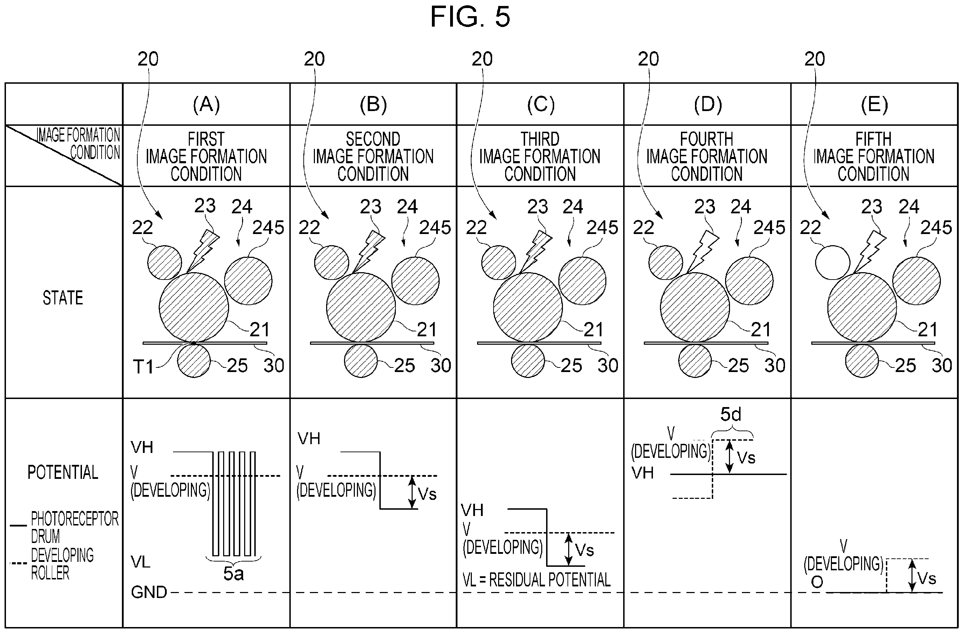

Fig. 5 is a diagram illustrating the states of an image forming unit 20 in diagnosis mode. Fig. 5(A) illustrates the state of the image forming unit 20 under the first image formation condition; Fig. 5(B) illustrates the state of the image forming unit 20 under the second image formation condition; Fig. 5(C) illustrates the state of the image forming unit 20 under the third image formation condition; Fig. 5(D) illustrates the state of the image forming unit 20 under the fourth image formation condition; Fig. 5(E) illustrates the state of the image forming unit 20 under the fifth image formation condition.

In description about potential in Fig. 5, solid lines represent the potential of the photoreceptor drum 21; dashed lines represent the potential of the developing roller 245.

### The First Image Formation Condition

In the case of the first image formation condition illustrated in Fig. 5(A), the image forming unit 20 is in the state which is substantially the same as the normal case. That is, the first image formation condition is the same as the image formation condition in normal mode. In the present exemplary embodiment, in the normal case, as illustrated in Fig. 5(A), the charging device 22 is used to charge the photoreceptor drum 21 so that the potential of the surface of the photoreceptor drum 21 is at VH.

In the normal case, the exposure device 23 is used to radiate light to the surface of the photoreceptor drum 21 selectively. In portions in which an image is to be formed, as illustrated in Fig. 5(A), the potential of the photoreceptor drum 21 is at a potential VL smaller than the potential of the developing roller 245. Thus, toner from the developing roller 245 is deposited on the portions, at the potential VL, of the photoreceptor drum 21, where a toner image is formed. The toner image is transferred onto a sheet P through the intermediate transfer belt 30, and the toner image is formed on the sheet P. Thus, a diagnosis image is formed on a sheet P.

In the normal case, when the density of a formed image is to be decreased, as illustrated by reference character 5a in Fig. 5(A), times in which light is not radiated onto the photoreceptor drum 21 as well as times in which light is radiated onto the photoreceptor drum 21 are provided. Thus, portions without formation of an image are formed. At locations, to which light is radiated, of the photoreceptor drum 21, dotted toner images are formed; at locations, to which light is not radiated, toner is not deposited and blank areas are formed.

In the present exemplary embodiment, depending on the size of such a dotted toner image and the size of such a blank area, the density of a formed image varies. When such a blank area is relatively larger, a user sees the image as having less density.

### The Second Image Formation Condition

In the case of the second image formation condition illustrated in Fig. 5(B), like the case of the first image formation condition, the photoreceptor drum 21 is charged so that the potential of the surface of the photoreceptor drum 21 is at VH. In addition, in the case of the second image formation condition, the exposure device 23 is used to radiate light onto the photoreceptor drum 21 continuously. That is, in the case of the second image formation condition, the photoreceptor drum 21 is irradiated continuously so that such blank areas as described above are not formed.

In the case of the second image formation condition, a diagnosis image having a low density is formed. Specifically, in the case of the second image formation condition, compared with the normal case illustrated in Fig. 5(A), the output of the exposure device 23 is lowered so that the difference Vs between the potential of the surface of the photoreceptor drum 21 and the potential of the developing roller 245 is small. Thus, in the case of the second image formation condition, a diagnosis image having a low density is formed. In the case of the second image formation condition, to form a diagnosis image having a low density, the amount of exposure itself is decreased instead of forming such blank areas as described above. Thus, a diagnosis image having a low density is formed.

In the case of the second image formation condition, exposure to light is performed uniformly with low exposure output. Tonner from the developing roller 245 is deposited across the entire area, which is exposed to light uniformly and in which a diagnosis image is formed. In the case of the second image formation condition, for example, uneven light emitted from the exposure device 23 causes shading, which is due to the unevenness or the like, to appear more clearly in the formed diagnosis image. In this case, the fact that the image forming unit 20, which is a diagnosis target, has a malfunction may be identified.

As in the normal case, when dotted images and blank areas are formed to decrease the image density, if formed dotted images have unevenness or the like, influence of the unevenness or the like is difficult to appear in a diagnosis image. In contrast, in the case of the second image formation condition illustrated in Fig. 5(B), for example, density unevenness or the like appears more conspicuously in a diagnosis image, and it is clearer that the image forming unit 20 has a malfunction.

### The Third Image Formation Condition

In the case of the third image formation condition illustrated in Fig. 5(C), compared with the case of the second image formation condition, the charge potential VH of the photoreceptor drum 21 and the potential of the developing roller 245 are set to be low. In the case of the third image formation condition, the exposure device 23 is used to radiate light onto the photoreceptor drum 21 continuously. In addition, compared with the case of the second image formation condition, the output of the exposure device 23 is raised.

In the case of the third image formation condition, the charge potential VH of the photoreceptor drum 21 is low, and the output of the exposure device 23 is raised. Thus, exposure to light lowers the potential of the photoreceptor drum 21 to the residual potential of the photoreceptor drum 21. Further, in the case of the third image formation condition, like in the case of the second image formation condition, the surface of the photoreceptor drum 21 is exposed to light uniformly. Toner from the developing roller 245 is deposited across the entire area, which is exposed to light uniformly and in which a diagnosis image is formed.

In the case of the third image formation condition, even if a malfunction occurs in the charging device 22 or the exposure device 23, influence of the malfunction does not affect the potential of the photoreceptor drum 21, or such influence is small. In this case, if a malfunction occurs in the charging device 22 or the exposure device 23, influence of the malfunction is difficult to appear in a diagnosis image. In the case of this condition, regardless of whether a malfunction occurs in the charging device 22 or the exposure device 23, the potential of the photoreceptor drum 21 is decreased to the residual potential. Thus, regardless of whether a malfunction occurs in the charging device 22 or the exposure device 23, the potential of the photoreceptor drum 21 stays at a potential having a certain value.

Assume the case in which an image defect, such as density unevenness or a streak, appears in a diagnosis image, which is formed under the second image formation condition of not lowering the potential of the photoreceptor drum 21 to the residual potential. Meanwhile, assume the case in which such an image defect does not appear in a diagnosis image, which is formed under the third image formation condition of lowering the potential of the photoreceptor drum 21 to the residual potential. In this case, it may be detected that the developing device 24 and the first transfer roller 25 do not have any malfunction.

### The Fourth Image Formation Condition

In the case of the fourth image formation condition illustrated in Fig. 5(D), as illustrated by using reference character 5d in Fig. 5(D), the potential of the developing roller 245 is set to be higher than the charge potential VH of the photoreceptor drum 21. In the case of the fourth image formation condition, the photoreceptor drum 21 is not exposed to light. Since exposure to light is not performed, the potential of the photoreceptor drum 21 is not lowered. However, the higher potential of the developing roller 245 causes a developing bias to occur between the photoreceptor drum 21 and the developing roller 245. Therefore, also in this case, toner from the developing roller 245 is deposited on the surface of the photoreceptor drum 21, and a uniform toner image is formed on the surface of the photoreceptor drum 21.

In the case of the fourth image formation condition, since no exposure to light is performed, control related to locations of toner deposition is not exerted. Therefore, toner from the developing roller 245 is deposited across the entire charged surface of the photoreceptor drum 21, where a diagnosis image is formed.

In the case of the fourth image formation condition, it may be detected whether a malfunction occurs in the exposure device 23. Assume the case in which, in the case of the second image formation condition of performing both charging and exposure to light, for example, an image defect of a streak occurs in a diagnosis image, while, in the case of the fourth image formation condition of not performing exposure to light, such an image defect of a streak does not occur. In this case, it may be detected that a malfunction occurs in the exposure device 23.

### The Fifth Image Formation Condition

In the case of the fifth image formation condition illustrated in Fig. 5(E), the potential of the photoreceptor drum 21 is at zero. That is, in the case of the fifth image formation condition, the photoreceptor drum 21 is not charged. In addition, the potential of the developing roller 245 is set to be higher than that of the photoreceptor drum 21. In the case of the fifth image formation condition, the photoreceptor drum 21 is not exposed to light. In the case of the fifth image formation condition, neither charging nor exposure to light is performed. However, the higher potential of the developing roller 245 causes a developing bias to occur between the photoreceptor drum 21 and the developing roller 245. Thus, toner from the developing roller 245 is deposited on the surface of the photoreceptor drum 21. Also in this case, a diagnosis image is formed across the entire surface of the photoreceptor drum 21. In the case of this condition, avoidance of exposure to light onto the entire surface of a sheet is not always necessary; a picture for checking the state of an apparatus and a part of a sheet for printing information may be exposed to light.

The fifth image formation condition enables a malfunction, which may be present in the charging device 22 or the exposure device 23, to be detected. Assume the case in which, in the case of the second image formation condition of performing both charging and exposure to light, an image defect occurs, and in which, in the case of the fifth image formation condition of performing neither charging nor exposure to light, such an image defect does not occur. In this case, it may be detected that a malfunction occurs in the charging device 22 or the exposure device 23.

The second image formation condition may be a condition for determining whether a malfunction occurs in an image forming unit 20 which is a diagnosis target. A diagnosis image formed under the second image formation condition may be a diagnosis image for determining whether a malfunction occurs in an image forming unit 20 which is a diagnosis target.

The third to fifth image formation conditions are conditions for identifying a component, in which a malfunction has occurred, among multiple components included in an image forming unit 20 which is a diagnosis target. Diagnosis images formed under the third to fifth image formation conditions may be diagnosis images for identifying a component, in which a malfunction has occurred, among the components included in an image forming unit 20 which is a diagnosis target.

### Formation of Margins

As described above, in the present exemplary embodiment, diagnosis images are formed on sheets P under the respective image formation conditions for an image forming unit 20 which is a diagnosis target. In the present exemplary embodiment, margins having different forms are formed on sheets P on which diagnosis images are formed. This process is performed in such a manner that the CPU 91a, which is an exemplary processor, reads programs, which are stored in the information storage device 92 or the like, onto the RAM 91c, which is used as a work area, for execution. The diagnosis images are differentiated on the basis of the margins which have different forms and which are formed on the sheets P.

More specifically, image formation operations under the image formation conditions are performed in the predetermined order. Margins having different forms are formed in the predetermined order in the image formation operations. Thus, the forms of margins, which are formed on sheets P, enable identification of the order of execution of the image formation operations of outputting the sheets P, and enable identification of the image formation conditions having been applied in that order.

How to form margins will be described. In the case of an operation with exposure to light, a margin may be formed through control of exposure to light for an electrostatic latent image on the surface of the photoreceptor drum 21. In contrast, examples of how to form margins in the case of an operation without exposure to light include a method of supplying no bias voltage for causing a developing bias. In the present exemplary embodiment, in the case of an operation without exposure to light, the developing roller 245 is supplied with a bias voltage so that the potential of the developing roller 245 is higher than the charge potential VH of the photoreceptor drum 21. Thus, a toner image is formed on the surface of the photoreceptor drum 21. Therefore, a toner image is formed while a bias voltage is supplied; when supply of the bias voltage is stopped, a margin is formed at the corresponding location of the toner image. Therefore, the size (width) of a margin may be controlled by controlling the time for which no bias voltage is supplied. Specifically, a margin is made smaller with a shorter time for which no bias voltage is supplied. Even when supply of a bias voltage is stopped, the charge on the developing roller 245 does not disappear immediately. Thus, the boundary between the margin and the toner image has a certain width. The same is true for the boundary between a margin and a toner image which is obtained when supply of a bias voltage starts.

The method for causing no developing bias is described above. However, the configuration is not limited to this. Other methods include a method in which a bias voltage for causing the first transfer bias is not supplied. In this method, control of the developing device 24 is not necessary. In an image formation operation according to the present exemplary embodiment, after the developing device 24 forms a toner image on the surface of the photoreceptor drum 21, the first transfer bias is caused to occur at the first transfer position T1 (see Fig. 2). Thus, the toner image is transferred onto the intermediate transfer belt 30. This causes the toner image, which has been formed on the surface of the photoreceptor drum 21, to be subjected to first transfer to the image-carrying surface of the intermediate transfer belt 30. Therefore, control is exerted so that no bias voltage is supplied to an area for forming a margin on a sheet P. Thus, while no bias voltage is supplied, a toner image is not transferred onto the image-carrying surface of the intermediate transfer belt 30. This causes a margin to be formed on the sheet P. In addition, like the case of the developing bias, the time for which no bias voltage is supplied between the photoreceptor drum 21 and the first transfer roller 25 is controlled. Thus, the size (width) of a margin, which is formed in a toner image transferred to the intermediate transfer belt 30, may be controlled.

Further, another example of a method of forming a margin is a method in which a bias voltage for causing the second transfer bias is not supplied. In an image formation operation according to the present exemplary embodiment, after a toner image is subjected to first transfer to the image-carrying surface of the intermediate transfer belt 30, the second transfer bias is caused to occur at the second transfer position T2 (see Fig. 2). Thus, the toner images are transferred to a sheet P. This causes the toner images, which are held on the image-carrying surface of the intermediate transfer belt 30, to be subjected to second transfer to the sheet P. Therefore, control is exerted so that no bias voltage is supplied to an area for forming a margin on a sheet P. Thus, while no bias voltage is supplied, the toner images are not transferred onto the sheet P. Thus, a margin is formed on the sheet P. In addition, like the case of the developing bias, the time for which no bias voltage is supplied between the supporting roller 31d and the second transfer roller 40 is controlled. Thus, the size (width) of a margin formed in the toner images transferred to a sheet P may be controlled. These operations are controlled by the control device 90.

In the present exemplary embodiment, margins, having different forms, are formed along with diagnosis images on sheets P in the respective image formation operations performed in the predetermined order. For example, the case in which image formation operations under the first to fifth image formation conditions are performed sequentially, and in which margins having stepwise different forms are formed on the respective sheets P on which diagnosis images are formed will be described. More specifically, an exemplary margin form, in which the sizes of margins are increased stepwise, will be described. In the present exemplary embodiment, the developing bias is adjusted to form a margin on a sheet P.

When the sizes of margins are increased stepwise for the respective sheets P, control is exerted so that the times for which no bias voltage is supplied are increased stepwise for the respective sheets P. Thus, areas in which no toner images are formed on the photoreceptor drum 21 are increased stepwise in size. Accordingly, the sizes of margins formed on sheets P are increased stepwise.

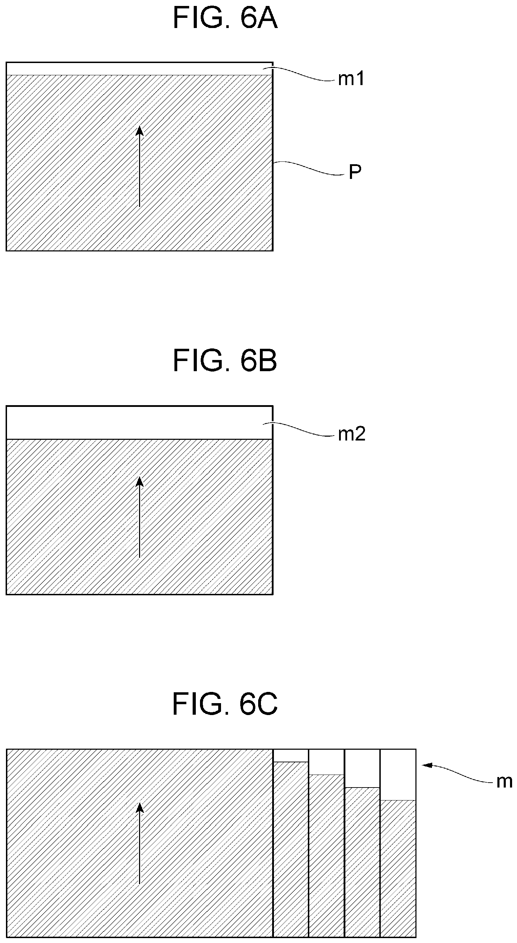

Figs. 6A to 6C are diagrams illustrating examples in which margins m are formed on sheets P on which diagnosis images are formed; Fig. 6A is a diagram illustrating an example in which a margin m1 is formed on a sheet P; Fig. 6B is a diagram illustrating an example in which a margin m2 wider than the margin m1 is formed on a sheet P; Fig. 6C is a diagram illustrating the state in which sheets P, on which different margins have been formed, are stacked. When it is not necessary to differentiate margins, the margins are described simply as margins m. The arrows in Figs. 6A to 6C represent the sheet feed direction. The sheet feed direction refers to a direction in which a sheet P, on which an image has been formed, is discharged.

In Fig. 6A, the margin m1 is formed on the leading side in the sheet feed direction of a sheet P on which a diagnosis image is formed. The margin m1 is formed so as to extend in a belt-like manner in the direction intersecting the sheet feed direction. In Fig. 6B, the margin m2 having a width (the length in the sheet feed direction) larger than that of m1 is formed on the leading side in the sheet feed direction of a sheet P on which a diagnosis image is formed. Like the margin m1, the margin m2 is formed so as to extend in a belt-like manner in the direction intersecting the sheet feed direction. In the present exemplary embodiment, the sizes of margins are increased stepwise for the respective sheets P on which diagnosis images are formed. Therefore, when diagnosis images under the first to fifth image formation conditions are formed on sheets P, margins of stepwise different sizes are formed on five sheets P.

In the present exemplary embodiment, control is exerted so that the sizes of margins are increased stepwise. Therefore, as illustrated in Fig. 6C, margins having stepwise-increasing widths are formed on sheets P for diagnosis images formed under the first to fifth image formation conditions. Thus, for example, the sheet P, on which a diagnosis image having the smallest margin has been formed, may be determined to have been subjected to image formation under the first image formation condition. In the present exemplary embodiment, the form in which the sizes of margins formed on sheets P are increased stepwise is described. Alternatively, a form in which the sizes of margins are decreased stepwise may be employed. As long as image formation operations under the respective image formation conditions are performed in the predetermined order, and margins having different forms are formed in the image formation operations in the predetermined order, even if the forms of margins are not changed stepwise, the correspondences between the image formation conditions and the margins may be identified. In the present exemplary embodiment, a margin is formed on the leading side in the sheet feed direction of a sheet P. Alternatively, a margin may be formed on the trailing side in the sheet feed direction.

### Another Method of Identifying Diagnosis Images Through Margins

In the example described above, the method of identifying diagnosis images by making the sizes of margins different from each other is described. However, the method of identifying diagnosis images through a margin form is not limited to the method described above. As another exemplary method, sheets P may be identified by forming, in margins, images having different densities. This method will be described below.

The density of an image may be adjusted through the difference Vs between the potential of the surface of the photoreceptor drum 21 and the potential of the developing roller 245. For example, when the difference Vs between the potential of the surface of the photoreceptor drum 21 and the potential of the developing roller 245 is small, the density of an image is low. In contrast, when the difference Vs between the potential of the surface of the photoreceptor drum 21 and the potential of the developing roller 245 is large, the density of an image is high. The potential difference Vs may be adjusted through control of the developing potential. In this method, the potential difference Vs is adjusted in an area, in which a margin is formed, for each image formation condition. Thus, images having different densities are formed in margins m, whose sizes are the same, for the respective image formation conditions.

In the present exemplary embodiment, as described above, image formation operations are performed in the order starting from the first image formation condition. Therefore, the output order of densities of images formed in margins is predetermined. Thus, the image formation conditions are identified from the densities of images formed in margins.

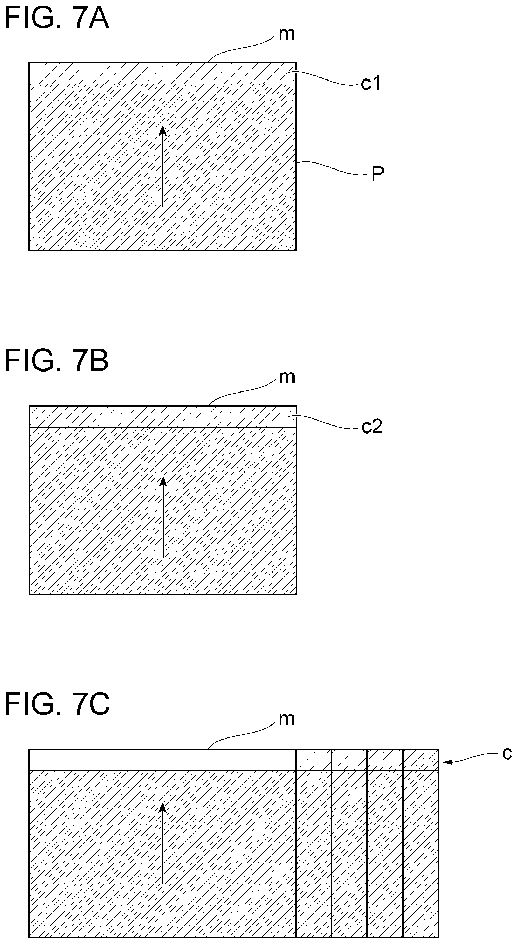

Figs. 7A to 7C are diagrams illustrating examples in which images having different densities are formed in margins on sheets P on which diagnosis images are formed; Fig. 7A is a diagram illustrating an example in which an image having a density c1 is formed in a margin m; Fig. 7B is a diagram illustrating an example in which an image having a density c2 different from the density c1 is formed in a margin m; Fig. 7C is a diagram illustrating the state in which sheets P, on which images having different densities have been formed in margins m, are stacked. When it is not necessary to differentiate the densities, the densities are described simply as densities c. The arrows in Figs. 7A to 7C represent the sheet feed direction.

In Fig. 7A, a margin m is formed on the leading side in the sheet feed direction of a sheet P, on which a diagnosis image is formed, so as to extend in a belt-like manner in the direction intersecting the sheet feed direction. An image having the density c1 is formed in the margin m. In Fig. 7B, a margin m is formed on the leading side in the sheet feed direction of the sheet P, on which a diagnosis image is formed, so as to extend in a belt-like manner in the direction intersecting the sheet feed direction. An image having the density c2 different from the density c 1 is formed in the margin m. The sizes of the margins m are the same in Figs. 7A and 7B. In the present exemplary embodiment, the densities of images formed in margins m are increased stepwise for the respective sheets P, on which diagnosis images are formed. Therefore, when diagnosis images are formed on sheets P under the first to fifth image formation conditions, five sheets P having images, which have stepwise different densities and which are formed in margins, are formed.

For example, the control device 90 exerts control in areas, in which margins are formed, so that the potential differences Vs are increased stepwise for the respective image formation conditions. Thus, in margins m on sheets P on which diagnosis images are formed, images having stepwise-increasing densities for the respective image formation conditions are formed.

Fig. 7C illustrates the state in which the densities of images formed in margins m on sheets P are increased stepwise for diagnosis images formed under the first to fifth image formation conditions. The sizes of the margins m on the five sheets P are the same. In the present exemplary embodiment, by using Figs. 7A to 7C, the form in which the densities c of images formed in margins m are increased stepwise is described. In contrast, a form in which the densities c of images are decreased stepwise may be employed. Control is exerted in areas, in which margins are formed, so that the potential differences Vs are decreased stepwise for the respective image formation conditions. Thus, images having stepwise-decreasing densities are formed in margins m on sheets P. In the present exemplary embodiment, a margin m is formed on the leading side in the sheet feed direction of a sheet P. Alternatively, a margin m may be formed on the trailing side in the sheet feed direction.

In the present exemplary embodiment, the state of the image forming apparatus 2 is determined on the basis of diagnosis images formed on sheets P and the image formation conditions. As described above, in the present exemplary embodiment, the information processing apparatus 3, which determines the state of the image forming apparatus 2 on the basis of diagnosis images formed on sheets P, is included.

### The Configuration of the Information Processing Apparatus 3

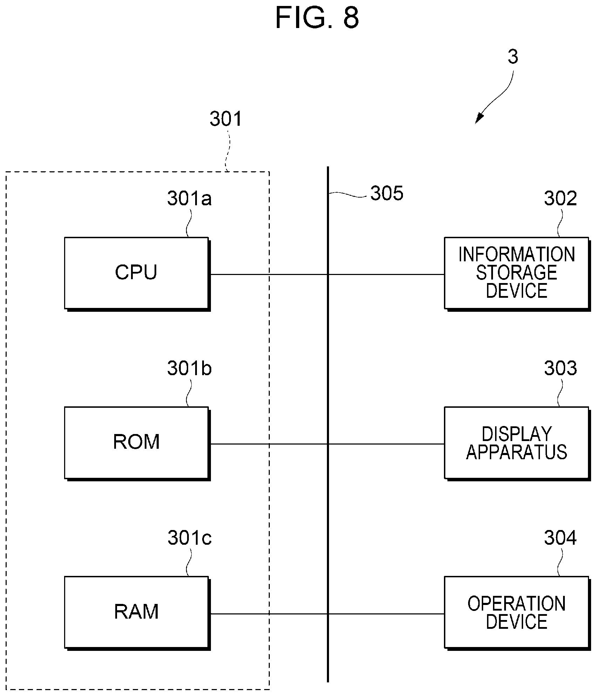

Fig. 8 is a diagram illustrating an exemplary configuration of the information processing apparatus 3.

The information processing apparatus 3 includes a computation processor 301, an information storage device 302 which stores information, a display apparatus 303, and an operation device 304. The information processing apparatus 3 also includes a communication interface (not illustrated). The computation processor 301 is formed by a computer. The computation processor 301 includes a CPU 301a which is an exemplary processor performing various processes described below. The computation processor 301 also includes a ROM 301b storing programs, and a RAM 301c used as a work area. The information storage device 302 is implemented by using an existing device, such as a hard disk drive or a semiconductor memory. The computation processor 301, the information storage device 302, the display apparatus 303, and the operation device 304 are connected to each other through a bus 305 or a signal line (not illustrated).

In the embodiment above, the term "processor" is broad enough to encompass one processor or plural processors in collaboration which are located physically apart from each other but may work cooperatively. The order of operations of the processor is not limited to one described in the embodiments above, and may be changed.

The display apparatus 303 displays information to users. Examples of the display apparatus 303 include a display. The operation device 304 receives input from users. Examples of the operation device 304 include a keyboard and a mouse, and a touch sensor. The operation device 304 may be constituted by a touch panel in which a touch sensor is combined with a display. The communication interface is used in information communication with the image forming apparatus 2.

In the present exemplary embodiment, an image forming unit 20, which is a diagnosis target, is diagnosed on the basis of the sheets P on which diagnosis images have been formed. This operation is performed in such a manner that the CPU 301a, which is an exemplary processor, reads programs, which are stored in the information storage device 302 or the like, onto the RAM 301c, which is used as a work area, for execution.

Specifically, for example, the specifying person reads multiple sheets P, on which margins having different forms as well as diagnosis images have been formed, by using the image reading apparatus 100 included in the image forming apparatus 2. Then, the communication interface between the image forming apparatus 2 and the information processing apparatus 3 is used to transmit, to the information processing apparatus 3, information about the read sheets P. Then, the CPU 301a of the information processing apparatus 3 extracts the margins from the read sheets P through operations by the specifying person. On the basis of the extracted margins, the execution order of the image formation operations performed under the different image formation conditions is identified. On the basis of the identified execution order of the image formation operations, the image formation conditions applied to the respective image formation operations are identified. The CPU 301a analyzes toner images from the diagnosis images formed in the respective image formation operations. On the basis of the analyzed toner images and the identified image formation conditions, the CPU 301a determines the state of the image forming apparatus 2.

For example, in the present exemplary embodiment, the five image formation conditions of the first to fifth image formation conditions are used. Therefore, in this case, five sheets P, on which diagnosis images having margins of different forms have been formed, are output. The specifying person reads the five sheets P by using the image reading apparatus 100, and transmits, to the information processing apparatus 3, information about the sheets P. The CPU 301a of the information processing apparatus 3 extracts the margins from the five read sheets P through operations of the specifying person. On the basis of the extracted margins, the execution order of the image formation operations performed under the five image formation conditions is identified. On the basis of the identified execution order of the five image formation operations, the image formation conditions applied to the respective image formation operations are identified. The CPU 301a analyzes toner images from the diagnosis images formed in the respective image formation operations. The CPU 301a determines the state of the image forming apparatus 2 on the basis of the analyzed toner images and the identified image formation conditions.

In the present exemplary embodiment, an image forming unit 20, which is a diagnosis target, includes components, such as a photoreceptor drum 21, a charging device 22, an exposure device 23, a developing device 24, and a first transfer roller 25. On the basis of the analyzed toner images and the identified image formation conditions, a component having a malfunction is specified. In the description above, the image reading apparatus 100 included in the image forming apparatus 2 is used to read images. However, the configuration is not limited to this. An image reading apparatus other than the image forming apparatus 2 may be provided. In this case, the information processing apparatus 3 uses a communication interface to obtain, from the image reading apparatus, information about read images.

An image forming unit 20, which is a diagnosis target, may be diagnosed through a specifying person's viewing. For example, as illustrated in Figs. 6C and 7C, diagnosis images having margins of different forms are formed on sheets P. Thus, the specifying person may stack the sheets P to identify, from the margins of different forms, the diagnosis images and their corresponding image formation conditions. Thus, the specifying person diagnoses an image forming unit 20 which is a diagnosis target.

An exemplary embodiment of the present disclosure is described above. However, the technical scope of the present disclosure is not limited to the exemplary embodiment. For example, in the present exemplary embodiment, the example in which image formation operations under the first to fifth image formation conditions are performed sequentially is described. However, the configuration is not limited to this. Alternatively, the output order of margins having different forms is predetermined. Thus, even when image formation operations are performed in order different from the described order in which the image formation conditions are applied, the diagnosis images and their corresponding image formation conditions may be identified from the forms of the margins.

Instead of associating the order of the image formation conditions with the order of the forms of margins as described above, the individual image formation conditions may be associated with the respective forms of margins in advance. Even when some of the image formation conditions are used, image formation conditions may be identified from the forms of margins. Other than these, various changes and alternative configurations, which do not depart from the scope of the technical idea of the present disclosure, are encompassed in the present disclosure.

### Appendix

(((1))) An image forming apparatus comprising:
   an image forming unit that transfers a toner image onto a recording medium, the toner image being formed on an image carrier by an electrophotographic system; and
   one or more processors that control an operation of the image forming unit, and that are configured to:
      perform a plurality of operations under different conditions about charging and exposure to light in predetermined order, the plurality of operations including at least an operation of forming a toner image on the recording medium with the image carrier having been subjected to charging and exposure to light and an operation of forming a toner image on the recording medium with the image carrier having been subjected to no exposure to light and optionally to charging; and
      control the image forming unit to form margins of different forms, the margins being formed on pieces of the recording medium in the respective operations performed under the different conditions.
(((2))) The image forming apparatus according to (((1))),
   wherein the one or more processors are configured to:
   control the image forming unit to form the margins having stepwise different forms, the margins being formed on the pieces of the recording medium in the respective operations under the different conditions in the predetermined order.
(((3))) The image forming apparatus according to (((1))) or (((2))),
   wherein the one or more processors are configured to:
   control the image forming unit to form the margins having stepwise different sizes, the margins being formed in the plurality of operations performed in the predetermined order.
(((4))) The image forming apparatus according to (((1))) or (((2))),
   wherein the one or more processors are configured to:
   control the image forming unit to form toner images having stepwise different densities, the toner images being formed in the margins in the plurality of operations performed in the predetermined order.
(((5))) The image forming apparatus according to any one of (((1))) to (((4))),
   wherein the one or more processors are configured to:
   control the image forming unit to form the margins extending in a belt-like manner in a direction intersecting a feed direction of the recording medium, the margins being formed on either one or both of a leading side and a trailing side of the recording medium in the feed direction, the feed direction being a direction in which the recording medium is fed in image formation using the image forming unit.
(((6))) The image forming apparatus according to any one of (((1))) to (((5))),
   wherein the one or more processors are configured to:
   control the image forming unit to form the margins having different widths, the margins being formed in the respective operations performed in the predetermined order.
(((7))) A processing system comprising:
   the image forming apparatus according to any one of (((1))) to (((6)));
   a reading apparatus that reads pieces of the recording medium on which toner images have been formed by the image forming apparatus; and
   a processing apparatus that extracts the margins from the pieces of the recording medium which are read by the reading apparatus, and that, on a basis of the extracted margins, identifies execution order of a plurality of operations performed under the different conditions by the image forming apparatus.
(((8))) The processing system according to (((7))),
   wherein the processing apparatus:
   analyzes the toner images formed in the respective operations;
   on a basis of the identified execution order of the plurality of operations, identifies the conditions applied to the respective operations; and
   on a basis of the analysis result of the toner images and the identified conditions, determines a state of the image forming apparatus.
(((9))) A program for controlling a computer included in an image forming apparatus, the image forming apparatus including an image forming unit, the image forming unit transferring a toner image onto a recording medium, the toner image being formed on an image carrier by an electrophotographic system, the computer controlling an operation of the image forming apparatus, the program causing the computer to execute a process comprising:
   causing the image forming unit to perform, in predetermined order, a plurality of operations under different conditions about charging and exposure to light, the plurality of operations including at least an operation of forming a toner image on the recording medium with the image carrier having been subjected to charging and exposure to light and an operation of forming a toner image on the recording medium with the image carrier having been subjected to no exposure to light and optionally to charging; and
   forming margins on pieces of the recording medium in the respective operations under the different conditions, the margins having different forms.

The disclosure according to (((1))) enables correspondences between formed images and conditions, which are used in formation of the images, to be identified on the basis of the images.

The disclosure according to (((2))) facilitates identification of the output order of pieces of the recording medium through the stepwise differences among the forms of margins.

The disclosure according to (((3))) facilitates identification of the output order of pieces of the recording medium through the stepwise-changing sizes of margins.

The disclosure according to (((4))) facilitates identification of the output order of pieces of the recording medium through the stepwise-changing densities of toner images formed in margins.

The disclosure according to (((5))) facilitates comparison among margins in images, which are formed under the respective conditions, through determination of the positions of the margins.

The disclosure according to (((6))) facilitates identification using belt-like margins.

The disclosure according to (((7))) enables correspondences between formed images and the conditions, which are used in formation of the images, to be identified on the basis of the images.

The disclosure according to (((8))) enables correspondences between formed images and the conditions, which are used in formation of the images, to be identified on the basis of the images, and enables the image forming apparatus to be diagnosed.

The disclosure according to (((9))) enables correspondences between formed images and the conditions, which are used in formation of the images, to be identified on the basis of the images.

## Claims

1. An image forming apparatus comprising:
an image forming unit that transfers a toner image onto a recording medium, the toner image being formed on an image carrier by an electrophotographic system; and
one or more processors that control an operation of the image forming unit, and that are configured to:
perform a plurality of operations under different conditions about charging and exposure to light in predetermined order, the plurality of operations including at least an operation of forming a toner image on the recording medium with the image carrier having been subjected to charging and exposure to light and an operation of forming a toner image on the recording medium with the image carrier having been subjected to no exposure to light and optionally to charging; and
control the image forming unit to form margins of different forms, the margins being formed on pieces of the recording medium in the respective operations performed under the different conditions.

2. The image forming apparatus according to claim 1,
wherein the one or more processors are configured to:
control the image forming unit to form the margins having stepwise different forms, the margins being formed on the pieces of the recording medium in the respective operations under the different conditions in the predetermined order.

3. The image forming apparatus according to claim 1 or 2,
wherein the one or more processors are configured to:
control the image forming unit to form the margins having stepwise different sizes, the margins being formed in the plurality of operations performed in the predetermined order.

4. The image forming apparatus according to claim 1 or 2,
wherein the one or more processors are configured to:
control the image forming unit to form toner images having stepwise different densities, the toner images being formed in the margins in the plurality of operations performed in the predetermined order.

5. The image forming apparatus according to any one of claims 1 to 4,
wherein the one or more processors are configured to:
control the image forming unit to form the margins extending in a belt-like manner in a direction intersecting a feed direction of the recording medium, the margins being formed on either one or both of a leading side and a trailing side of the recording medium in the feed direction, the feed direction being a direction in which the recording medium is fed in image formation using the image forming unit.

6. The image forming apparatus according to any one of claims 1 to 5,
wherein the one or more processors are configured to:
control the image forming unit to form the margins having different widths, the margins being formed in the respective operations performed in the predetermined order.

7. A processing system comprising:
the image forming apparatus according to any one of claims 1 to 6;
a reading apparatus that reads pieces of the recording medium on which toner images have been formed by the image forming apparatus; and
a processing apparatus that extracts the margins from the pieces of the recording medium which are read by the reading apparatus, and that, on a basis of the extracted margins, identifies execution order of a plurality of operations performed under the different conditions by the image forming apparatus.

8. The processing system according to claim 7,
wherein the processing apparatus:
analyzes the toner images formed in the respective operations;
on a basis of the identified execution order of the plurality of operations, identifies the conditions applied to the respective operations; and
on a basis of the analysis result of the toner images and the identified conditions, determines a state of the image forming apparatus.

9. A program for controlling a computer included in an image forming apparatus, the image forming apparatus including an image forming unit, the image forming unit transferring a toner image onto a recording medium, the toner image being formed on an image carrier by an electrophotographic system, the computer controlling an operation of the image forming apparatus, the program causing the computer to execute a process comprising:
causing the image forming unit to perform, in predetermined order, a plurality of operations under different conditions about charging and exposure to light, the plurality of operations including at least an operation of forming a toner image on the recording medium with the image carrier having been subjected to charging and exposure to light and an operation of forming a toner image on the recording medium with the image carrier having been subjected to no exposure to light and optionally to charging; and
forming margins on pieces of the recording medium in the respective operations under the different conditions, the margins having different forms.

10. A method for an image forming apparatus including an image forming unit, the image forming unit transferring a toner image onto a recording medium, the toner image being formed on an image carrier by an electrophotographic system, the method comprising:
causing the image forming unit to perform, in predetermined order, a plurality of operations under different conditions about charging and exposure to light, the plurality of operations including at least an operation of forming a toner image on the recording medium with the image carrier having been subjected to charging and exposure to light and an operation of forming a toner image on the recording medium with the image carrier having been subjected to no exposure to light and optionally to charging; and
forming margins on pieces of the recording medium in the respective operations under the different conditions, the margins having different forms.
